# EUROPEAN PATENT APPLICATION

(11) **EP 2 375 313 A1**
(43) Date of publication of application: **12.10.2011**
(21) Application number: 11159311.7
(22) Date of filing: 23.03.2011
(51) Int. Cl.: G06F 3/023

(54) **Electronic apparatus, input signal control method, program, and recording medium**

(30) Priority: 30.03.2010 JP 2010077263
(71) Applicant: Sony Corporation, Tokyo 108-0075 (JP)
(72) Inventor: Fujimoto Kouhei, Tokyo 108-0075 (JP); Murata, Yuki, Tokyo 108-0075 (JP); Tsuzuki, Akiko, Tokyo 108-0075 (JP); Shimizu, Takanori, Tokyo 108-0075 (JP)
(74) Representative: Körber, Martin Hans

(57) **Abstract**

An electronic apparatus includes an input unit that receives an input signal from a first operation unit, a communication unit that is capable of performing communication with an external apparatus as a host apparatus and a device apparatus, a display unit, and a control unit that controls an input signal from the input unit such that the display unit performs a display according to an operation of the first operation unit. When the communication unit operates as a host apparatus, the control unit receives an instruction for operating the communication unit as a device apparatus, performs switching of a driver by uninstalling a driver for the action of the host apparatus and installing a driver for the action of the device apparatus, and transmits the input signal from the communication unit to the external apparatus which becomes the host apparatus corresponding thereto.

## Description

### BACKGROUND OF THE INVENTION

### 1. Field of the Invention

The present invention relates to an electronic apparatus, an input signal control method, a program, and a recording medium. More particularly, a communication unit of an electronic apparatus may transmit an input signal to an external apparatus which becomes a host apparatus as an action of the device apparatus from the host apparatus.

### 2. Description of the Related Art

In the related art, communication between an electronic apparatus and an input device is performed, and an input signal according to user operation is transmitted from the input device to the electronic apparatus so as to control the electronic apparatus from a separate position. For example, the invention of Japanese Unexamined Patent Application Publication No. 2000-276269 discloses that input data from a data input device is switched and wirelessly transmitted to a plurality of computers.

Japanese Unexamined Patent Application Publication No. 11-45221 discloses that a remote control transponder is provided between a computer body and an input/output device and the input/output device is operated whether during movement or at a destination with respect to a computer of a remote place so as to perform remote control of the computer.

### SUMMARY OF THE INVENTION

However, in the electronic apparatus, an input device in which an operation key or the like is mounted may be provided in advance and an input device in which various operation keys or the like are provided may be separately purchased such that more various operation inputs are possible. For example, in a gaming machine, an input device (wireless controller) specialized for gaming operation is provided and a wireless keypad in which various operation keys or the like are provided is separately purchased so as to easily perform text input or the like. Accordingly, in order to easily perform text input or the like, it is necessary to purchase a wireless keypad.

In addition, in an electronic apparatus such as a computer device, in order to execute a variety of application software, an operation unit (for example, a keyboard or the like) capable of performing a variety of operations is provided. However, such an operation unit is provided in order to execute a variety of application software in the computer device or to perform an input operation or the like while executing the application software.

Accordingly, in the invention, it is desirable to provide an electronic apparatus, an input signal control method, a program, and a recording medium, in which a communication unit of the electronic apparatus may transmit an input signal to an external apparatus which becomes a host apparatus as an action of the device apparatus from the host apparatus.

Various aspects and features of the invention are defined in the appended claims.

According to an embodiment of the invention, there is provided an electronic apparatus including: an input unit that receives an input signal from a first operation unit; a communication unit that is capable of performing communication with an external apparatus as a host apparatus and a device apparatus; a display unit; and a control unit that controls a input signal from the input unit such that the display unit performs a display according to an operation of the first operation unit, wherein, when the communication unit operates as a host apparatus, the control unit receives an instruction for operating the communication unit as a device apparatus, performs switching of a driver by uninstalling a driver for the action of the host apparatus and installing a driver for the action of the device apparatus, and transmits the input signal from the communication unit to the external apparatus which becomes the host apparatus corresponding thereto.

In addition, the control unit performs a display indicating that the action of the device apparatus is performed in the display unit and a display indicating an operation for switching the action of the device apparatus to the action of the host apparatus. If a plurality of operation units is provided, the control unit transmits the input signal from the first operation unit from the communication unit to the external apparatus which becomes the host apparatus and performs a display according to the input signal from the second operation unit in the display unit. The control unit performs switching from the driver for the action of the device apparatus to the driver for the action of the host apparatus, when application software for operating the communication unit as the device apparatus is completed. When the driver for the action of the host apparatus is not installed upon start-up of an action system of the electronic apparatus, the control unit installs the driver.

According to another embodiment of the invention, there is provided a method of controlling an input signal of an electronic apparatus having a display unit, the method including the steps of: performing switching from a driver for operating a communication unit of the electronic apparatus as a host apparatus to a driver for operating the communication unit as a device apparatus; and transmitting the input signal to an external apparatus.

According to another embodiment of the invention, there is provided a program for executing, on a computer which receives an input signal from an operation unit and is built in an electronic apparatus having a display unit, a process including the steps of: performing switching from a driver for operating a communication unit of the electronic apparatus as a host apparatus to a driver for operating the communication unit as a device apparatus; and transmitting the input signal to an external apparatus.

According to another embodiment of the invention, there is provided a computer-readable recording medium having recorded thereon a program for controlling an input signal of an electronic apparatus having a display unit, the program including the steps of: performing switching from a driver for operating a communication unit of the electronic apparatus as a host apparatus to a driver for operating the communication unit as a device apparatus; and transmitting the input signal to an external apparatus.

According to the invention, it is possible to switch the communication unit from the action of the host apparatus to the action of the device apparatus by switching the driver. When the communication unit operates as the device apparatus, the control unit transmits the input signal from the communication unit to the external apparatus which becomes the host apparatus corresponding thereto. Accordingly, even when an operation unit is purchased and is not connected to the external apparatus, it is possible to use the operation unit provided in the electronic apparatus or the operation unit connected to the electronic apparatus as the operation unit of the external apparatus.

### BRIEF DESCRIPTION OF THE DRAWINGS

Embodiments of the invention are now described with reference to the enclosed drawings, throughout which like parts are referred to by like references, and in which
Fig. 1 is a diagram showing the configuration of an electronic apparatus;
Fig. 2 is a diagram showing the configuration of a driver and application software used when the electronic apparatus operates as a host apparatus;
Fig. 3 is a diagram showing the configuration of a driver and application software used when the electronic apparatus operates as a device apparatus;
Fig. 4 is a flowchart illustrating a basic action of an application;
Figs. 5A to 5C are diagrams showing a message display example;
Fig. 6 is a flowchart illustrating a switching action; and
Fig. 7 is a flowchart illustrating a restoration action.

### DESCRIPTION OF THE PREFERRED EMBODIMENTS

Hereinafter, embodiments of the invention will be described. In addition, description will be given in the following order.
1. Configuration of Electronic Apparatus
2. Action of Electronic Apparatus

### 1. Configuration of Electronic Apparatus

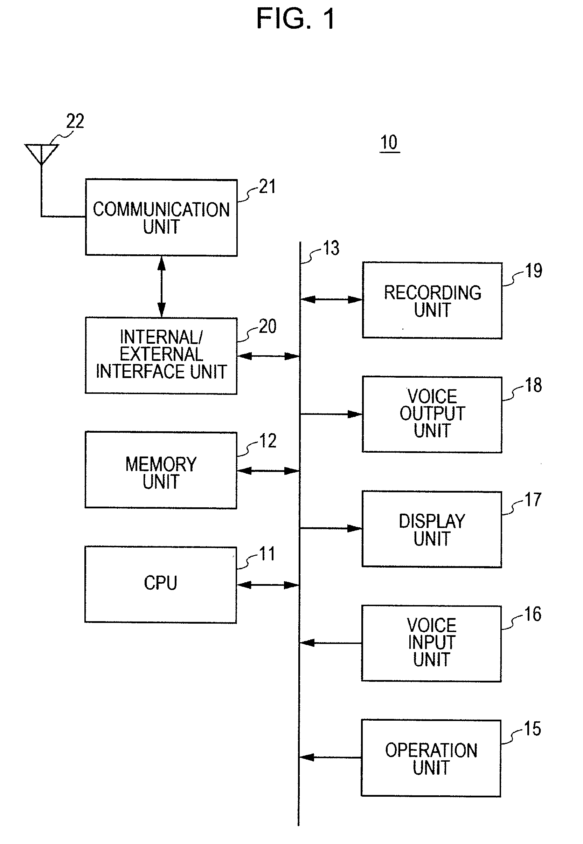

Fig. 1 shows the schematic configuration of an electronic apparatus, for example, a personal computer (hereinafter, referred to as a "computer") of the invention. In the computer 10, as communication with an external apparatus 30, for example, Bluetooth (trademark), a wired or wireless Local Area Network (LAN), a UWB, a Wireless USB (WUSB), or the like is used. Hereinafter, the case of using Bluetooth (trademark) will be described.

In the computer 10, a Central Processing Unit (CPU) 11 and a memory unit 12 including a Read Only Memory (ROM) or a Random Access Memory (RAM) are connected to each other by a bus 13.

An operation unit 15, a voice input unit 16, a display unit 17, a voice output unit 18, and a recording unit 19 are connected to the bus 13. The operation unit 15 includes a keyboard, a mouse, and the like and generates an input signal according to a user operation. The operation unit 15 includes not only an operation unit mounted in the computer 10 but also an externally connected operation unit. That is, the computer 10 has an input unit for receiving an input signal from the operation unit 15.

The voice input unit 16 is configured using a microphone. A headset, an external microphone, or the like may be connected to the voice input unit 16. The display unit 17 is configured using a display device, for example, a liquid crystal display device. The display unit 17 may output an image signal to an external display device. The voice output unit 18 may be configured using a speaker. A headset, an external speaker, or the like may be connected to the voice output unit 18. The recording unit 19 is configured using a hard disk, a rewritable non-volatile memory, or the like.

An internal/external interface unit 20 is connected to the bus 13. The internal/external interface unit 20 is an interface for connecting an extension card corresponding to the Peripheral Component Interconnect (PCI) standard, an apparatus corresponding to the Universal Serial Bus (USB) standard, a communication unit 21 provided in the computer, or the like to each unit through the bus 13.

The communication unit 21 has a chipset corresponding to Bluetooth (trademark) and performs wireless communication with an external apparatus using an antenna 22. The communication unit 21 performs switching of a driver or the like as described below and performs wireless communication with an external apparatus as a host apparatus or a device apparatus.

In the computer having the above-described configuration, the CPU 11 loads and executes a program recorded in the recording unit 19 to the memory unit 12 through the bus 13. The program executed by the CPU 11 may be installed in the memory unit 12 or the recording unit 19 in advance. For example, the program may be recorded in removable media which are package media including magnetic discs (including a flexible disc), optical discs (Compact Disc-Read Only Memory (CD-ROM), Digital Versatile Discs (DVD), or the like), magneto-optical discs, a semiconductor memory, or the like and may be read from the removable media and recorded in the recording unit 19. The program may be provided through a wired or wireless transport medium such as a local area network, the Internet, or a digital satellite broadcast and the program may be received through the communication unit 21 or the like and recorded in the recording unit 19.

The CPU 11 loads and executes the program and controls the units such that an action according to a user operation of the operation unit 15 is performed in the computer 10. The CPU 11 performs a display according to the action in the display unit 17. The CPU 11 switches the driver according to the user operation so as to operate the computer 10 as the host apparatus or the device apparatus. The switching of the action of the host apparatus and the action of the device apparatus in the computer 10 is performed, for example, by switching the driver.

A Bluetooth apparatus (for example, a keyboard, a headset, a mobile phone, a FAX or the like) having various functions may be connected to the computer 10. To this end, in order to perform the action of the host apparatus, a Bluetooth driver for the host corresponding to many profiles is necessary. In order to perform the action of the device apparatus, a Bluetooth driver for the device corresponding only to a profile limited to the function of the device apparatus may be used. In the computer 10, the Bluetooth driver for the host which is created as a development maker of an operating system or device is installed as default. In the computer 10, two Bluetooth drivers may not be simultaneously installed. Accordingly, in consideration of this point, the Bluetooth driver for the device is prepared, the CPU 11 performs switching with the Bluetooth driver for the host which is already installed, and the communication unit 21 is switched from the action of the host apparatus to the action of the device apparatus.

In this way, when switching between the action of the host apparatus and the action of the device apparatus is performed by switching the driver using the CPU 11, it is possible to reliably and easily perform the action of the device apparatus with low development costs.

The CPU 11 operates the computer 10 according to an operation of the operation unit and performs a display according to the action in the display unit 17, when performing the action of the host apparatus. The CPU 11 transmits an input signal according to an operation of the operation unit 15 from the communication unit 21 when performing the action of the device apparatus. The CPU 11 performs a display indicating that the action of the device apparatus is performed and a display indicating that the action of the device apparatus is switched to the action of the host apparatus, when performing the action of the device apparatus in the display unit 17. The CPU 11 does not perform a display according to an operation in which an input signal is transmitted, when performing the action of the device apparatus.

### 2. Action of Electronic Apparatus

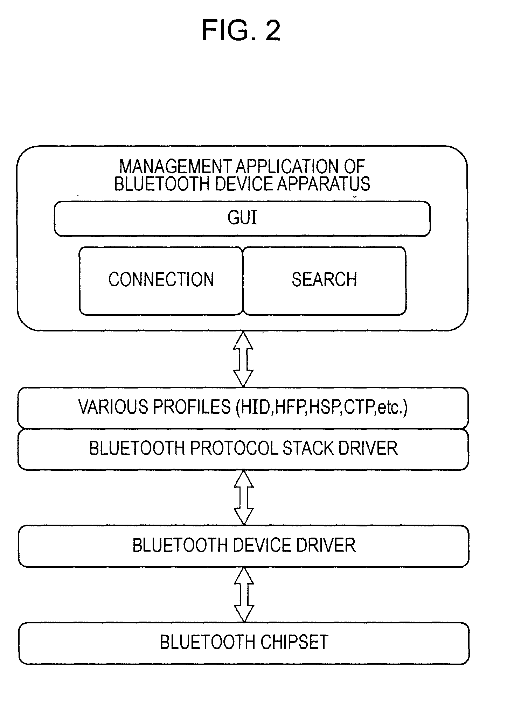

Fig. 2 is a diagram showing the configuration of the Bluetooth driver for the host and application software used when the communication unit 21 of the computer 10 operates as a host apparatus. The Bluetooth driver for the host includes a device driver, a protocol stack driver, or various profiles. A management application of a Bluetooth device apparatus is configured to be connected to the Bluetooth apparatus having various functions using such a driver.

The device driver controls hardware including a chipset of the communication unit 21.

The protocol stack driver is a program corresponding to the profile of the Bluetooth.

The profile is a protocol standardized for each kind of apparatus for performing communication using Bluetooth. For example, in a Human Interface Device Profile (HID), a protocol, an order, and a function used in a keyboard, a pointing device, or the like are defined. In the profile, various profiles such as a Hands-Free Profile (HFP) or Audio/Video Remote Control Profile (AVRCP) are defined. The HFP is a profile for performing call-out or call-in by voice using the HFP. The AVRCP is a profile for controlling a device such as television.

The management application of the Bluetooth device apparatus has a function for searching for the device apparatus using the host apparatus and a paring function for performing registration and authentication with the searched device apparatus and permitting connection with the registered device apparatus. The management application has a connection function for performing connection with the registered device apparatus. The management application has a GUI function, performs a display related to search, paring, and connection and confirms the searched result, the pairing state, the connection state, or the like.

The CPU 11 operates the computer 10 as the host apparatus using the Bluetooth driver for the host or the application software so as to perform communication with various device apparatuses.

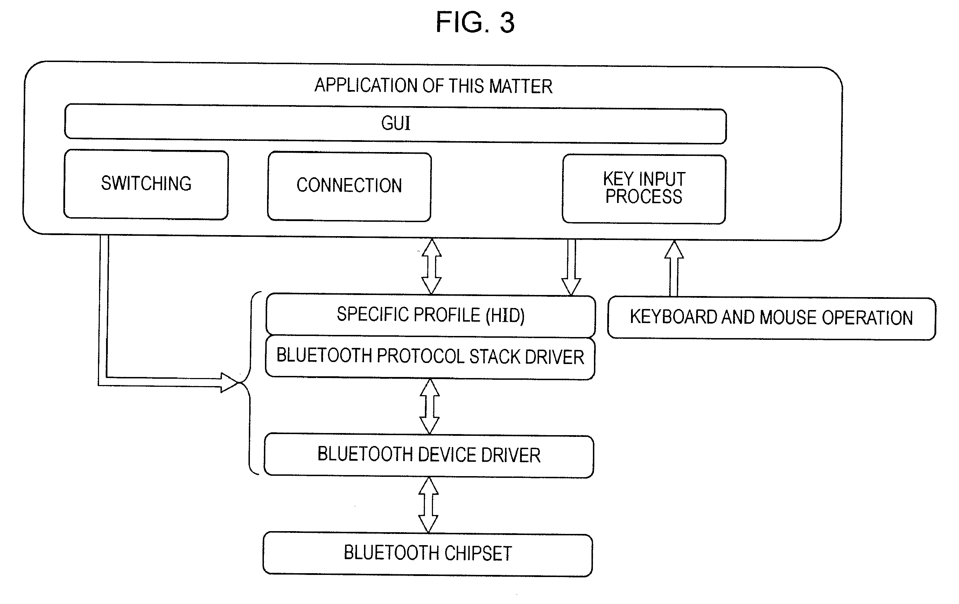

Fig. 3 shows the configuration of the Bluetooth driver for the device used when the communication unit 21 of the computer 10 operates the device apparatus and the application. The Bluetooth driver for the device includes a device driver, a protocol stack driver, and a specific profile. The device apparatus action application is configured to be connected to the host apparatus as the device apparatus using such a driver.

The device driver controls hardware including the chipset of the communication unit 21.

The protocol stack driver is a program corresponding to the profile of the Bluetooth.

The specific profile includes a profile corresponding to the kind of operated device apparatus when the computer 10 operates as the device apparatus. Specifically, since the computer 10 operates using a keyboard or the like, the human interface device profile HID is set to a specific profile.

The device apparatus action application has a key input processing function for receiving a user operation performed with respect to the operation unit 15, a connection function for performing connection with the host apparatus, and a switching function for switching the action of the device apparatus and the action of the host apparatus. The device action application has a GUI function, performs a display related to the switching operation from the action of the device apparatus to the action of the host action, and accurately performs an action switching operation. The device action application performs a display identifying that the computer 10 operates as the device apparatus by the GUI function.

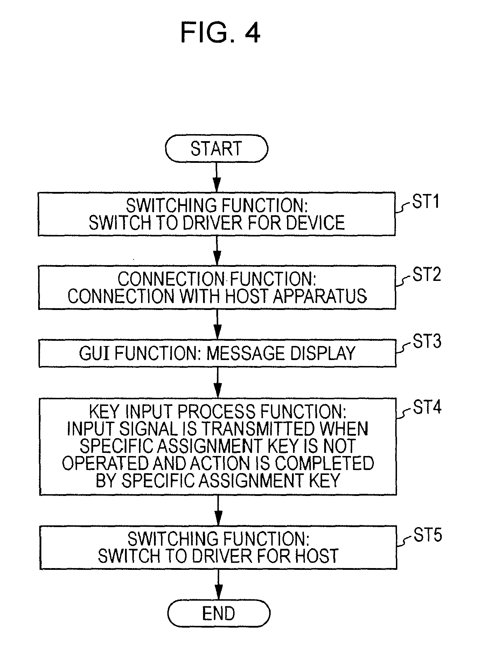

Next, the action when the computer 10 executes the device apparatus action application of the Bluetooth driver for the device will be described with reference to the flowchart of Fig. 4.

In step ST1, the CPU 11 switches to the driver for the device by the switching function. The CPU 11 receives an instruction from the device apparatus action application which is the application software for operating the communication unit as the device apparatus, performs switching from the driver for the action of the host apparatus to the driver for the action of the device apparatus, switches the profile and the protocol stack driver or the device driver for the host to the profile and the protocol stack driver or the device driver for the device, and proceeds to step ST2.

In step ST2, the CPU 11 performs connection with the host apparatus by the connection function. The CPU 11 performs connection with the host apparatus by using the profile and the protocol stack driver and the device driver for the device and proceeds to step ST3.

In step ST3, the CPU 11 performs a message display by the GUI function. The CPU 11 performs a display identifying that the device apparatus operates or a display related to the switching operation for switching the action of the device apparatus to the action of the host apparatus, for example, in the display unit 17, and proceeds to step ST4.

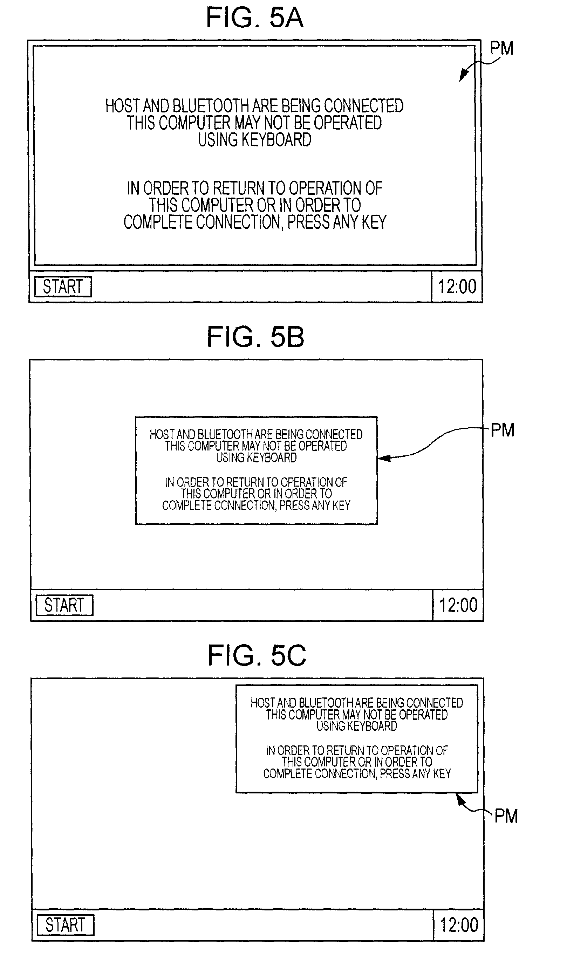

In Figs. 5A to 5C, a message display example is shown and an operation is accurately performed. Fig. 5A shows the case where a message display PM is performed using the entire display screen in the display unit 17. In the message display PM, for example, information identifying that the device apparatus operates and information related to the switching operation for switching the action of the device apparatus to the action of the host apparatus are displayed. By performing such a message display, a message indicating that key a operation may not be received may be reminded or the method for returning to the action of the host apparatus may be easily identified. If the message display PM is translucently displayed on the front most surface, it is possible to discriminate information displayed before the message display PM.

In step ST4, by the key input processing function, an input signal according to a key operation excluding a key operation of a predefined specific allocation key is transmitted to the host apparatus by the CPU 11. In addition, when a specific allocation key is operated, the action of the device apparatus is completed and proceeds to step ST5.

For example, if the operation unit includes a keyboard, a specific allocation key is set and the CPU 11 transmits an input signal according to a key operation to the host apparatus when a key operation of the specific allocation key is not performed. In addition, the CPU 11 does not perform the display according to the key operation in which the input signal is transmitted. The CPU 11 completes the action of the device apparatus when the key operation of the specific allocation key is performed.

In this case, as shown in Fig. 5B, the message display PM is performed in a region of a central portion of the display screen. As shown in Fig. 5C, the message display PM may be performed in a region offset from the center of the display screen. If the message display PM is performed in a portion of the display screen, the action of the host apparatus may be performed by referring to the display content of the portion which is not hidden by the message display PM. The display method shown in Figs. 5A to 5C may perform a message display in a desired format if it may be changed by the option setting function of the application.

If the operation unit includes a plurality of operation units, for example, a first operation unit and a second operation unit, and the action of the device apparatus is performed, the CPU 11 transmits an input signal according to a user operation of the first operation unit from the communication unit 21 by the key input processing function of the device apparatus action application. The CPU 11 may operate the computer 10 according to a user operation of the second operation unit and perform a display according to the action in the display unit 17. For example, if the first operation unit includes a keyboard and the second operation unit includes a pointing device (a mouse, a track ball, a touch panel, or the like), the CPU 11 transmits an input signal according to a keyboard operation from the communication unit 21 with the host apparatus. The CPU 11 performs a display or the like in the computer 10 according to an operation of the pointing device.

The CPU 11 may complete the action of the device apparatus and switch to the action of the host apparatus according to the operation of the pointing device. If the input signal according to the keyboard operation is transmitted to the host apparatus and the action of the computer 10 is controlled according to the operation of the pointing device, a selectively operated icon display or button display may be provided as the pointing device. If the display is selected, the CPU 11 switches the driver, completes the action of the device apparatus of the communication unit 21, and switches to the action of the host apparatus. In this way, even when the action switching function is not allocated to a predefined key of a keyboard, it is possible to switch the action to the pointing device. Accordingly, it is possible to transmit an input signal according to an operation of all keys of the keyboard.

The CPU 11 may perform a display indicating that the action of the device apparatus is performed according to an operation of a first operation device, when the action of the device apparatus is performed. For example, when a keyboard operation is performed, a display of a mark or the like indicating transmission to the host apparatus is performed. In this way, it is not necessary to perform a message display or the like identifying that the action of the device apparatus is performed. Accordingly, when the computer 10 operates according to an operation of the pointing device which is a second operation device, it is possible to prevent an operation from being interrupted by the display indicating that the action of the device apparatus is performed.

In step ST5, the CPU 11 switches to the driver for the host by the switching function. The CPU 11 switches the profile and the protocol stack driver or the device driver for the device to the profile and the protocol stack driver or the device driver for the host and completes the action of the device apparatus, when the application software for the action of the device apparatus is completed in step ST4.

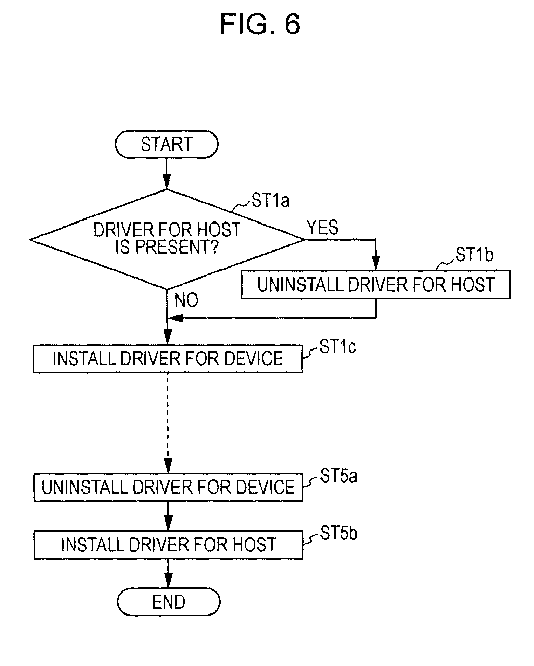

Fig. 6 is a flowchart illustrating a switching function. In Fig. 6, steps ST1a to ST1c correspond to step ST1 of Fig. 4 and steps ST5a to ST5b correspond to step ST5 of Fig. 4.

In step ST1a, is the CPU 11 determines whether or not the driver for the host is installed. The CPU 11 proceeds to step ST1b when the driver for the host is installed and proceeds to step ST1c when the driver for the host is not installed.

In step ST1b, the CPU 11 uninstalls the driver for the host. The CPU 11 uninstalls various profiles for the action of the host apparatus, the profile stack drivers corresponding to such profiles or the like when the action of the device apparatus is performed, and proceeds to step ST1c.

In step ST1c, the CPU 11 installs the driver for the device. The CPU 11 installs the human interface device profile HID necessary for performing the action of the device apparatus, the profile stack driver corresponding to the profile, or the like and performs the process from step ST2 of Fig. 4.

If a completion operation of the action of the device apparatus is performed in step ST4 of Fig. 4, in step ST5a, the CPU 11 uninstalls the driver for the device which is not necessary when the action of the host apparatus is performed and proceeds to step ST5b.

In step ST5b, the CPU 11 installs the driver for the host. The CPU 11 installs various profiles necessary for performing the action of the host apparatus, profile stack drivers corresponding to the various profiles, or the like.

The switching of the driver is not limited to the instruction from the device apparatus action application. For example, a switch or the like for performing switching of the action of the device apparatus and the action of the host apparatus may be provided and an operation of the operation unit such as this switch may be used as the instruction.

In this way, the CPU 11 may operate the computer 10 as the host apparatus or the device apparatus by switching the driver. Accordingly, even when a keyboard corresponding to the Bluetooth is not purchased, the existing computer operates as the device apparatus and the keyboard provided in the computer may be operated so as to perform a variety of input operations of the host apparatus.

If shut-down or the like is caused when the action of the device apparatus is performed, the switching from the driver for the device to the driver for the host may not be completed and the action of the host apparatus may not be performed. Accordingly, in the computer 10, a driver restoration action is performed and the action of the host apparatus is performed in a state in which the driver for the host is installed.

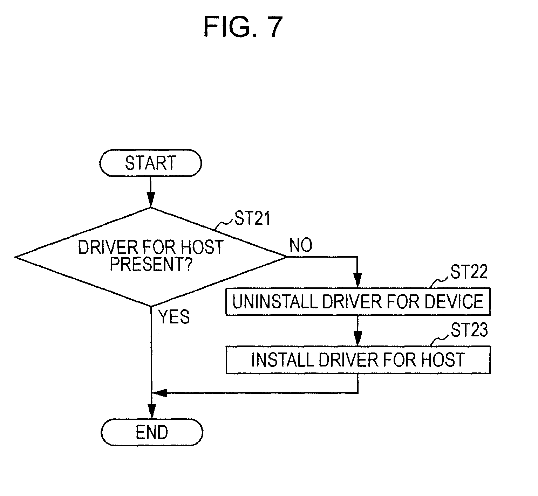

Fig. 7 shows a driver restoration action. In step ST21, the CPU 11 determines whether or not the driver for the host is installed. The CPU 11 completes the restoration action when it is determined that the driver for the host is installed. The CPU 11 proceeds to step ST22 when the driver for the device is installed as it is. In step ST22, the CPU 11 uninstalls the driver for the device and proceeds to step ST23.

In step ST23, the CPU 11 installs the driver for the host and completes the restoration action.

The CPU 11 performs the driver restoration action so as to install the driver when the driver used upon the action of the host apparatus is not installed upon start-up of the action system and may start the action of the host apparatus, for example, even when shut-down or the like is caused during the action of the device apparatus.

Although the case of using the human interface device profile as the profile is described in the above-described embodiments, the invention is also applicable to the case of using other profiles. For example, by using a profile for performing voice communication, a headset, a microphone, or the like used as, for example, the voice input unit 16 of the electronic apparatus 10 may operate as the device apparatus and a voice signal generated by the headset or the microphone may be transmitted to an external apparatus as an input signal according to a user operation.

The invention has been described in detail with reference to specific embodiments. However, it will be apparent to those skilled in the art that the embodiments may be modified and replaced without departing from the scope of the invention. Since the invention is disclosed in an exemplary form, the invention is not restrictively analyzed. In order to determine the scope of the invention, the range of claims is considered.

If the series of processes described in the specification are executed, a program having a process sequence recorded therein may be recorded on a recording medium in advance and may be installed from the recording medium to the computer. A program may be received through a network such as a Local Area Network (LAN) or the Internet and may be installed in a recording medium such as a built-in hard disk.

The present application contains subject matter related to that disclosed in Japanese Priority Patent Application JP 2010-077263 filed in the Japan Patent Office on March 30, 2010, the entire contents of which are hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. An electronic apparatus comprising:
an input unit that receives an input signal from a first operation unit;
a communication unit that is capable of performing communication with an external apparatus as a host apparatus and a device apparatus;
a display unit; and
a control unit that controls an input signal from the input unit such that the display unit performs a display according to an operation of the first operation unit,
wherein, when the communication unit operates as a host apparatus, the control unit receives an instruction for operating the communication unit as a device apparatus, performs switching of a driver by uninstalling a driver for the action of the host apparatus and installing a driver for the action of the device apparatus, and transmits the input signal from the communication unit to the external apparatus which becomes the host apparatus corresponding thereto.

2. The electronic apparatus according to claim 1, wherein the control unit performs switching from the driver for the action of the device apparatus to the driver for the action of the host apparatus, when application software for operating the communication unit as the device apparatus is completed.

3. The electronic apparatus according to claim 2, wherein the control unit uninstalls the driver for the action of the device apparatus and installs the driver for the action of the host apparatus.

4. The electronic apparatus according to claim 1, 2 or 3, wherein, when the driver for the action of the host apparatus is not installed upon start-up of an action system of the electronic apparatus, the control unit installs the driver.

5. The electronic apparatus according to one of the claims 1 to 4, wherein the control unit performs a display indicating that the action of the device apparatus is performed in the display unit when the action of the device apparatus is performed and a display indicating an operation for switching the action of the device apparatus to the action of the host apparatus.

6. The electronic apparatus according to one of the claims 1 to 5, wherein the input unit receives an input signal from a second operation unit, and
wherein, when the communication unit operates as the device apparatus, the control unit transmits the input signal from the first operation unit from the communication unit to the external apparatus which becomes the host apparatus and performs a display according to the input signal from the second operation unit to the display unit.

7. The electronic apparatus according to one of the claims 1 to 6, wherein, when the input unit receives the input signal from the first operation unit, the control unit performs a display indicating that the action of the device apparatus is performed in the display unit.

8. The electronic apparatus according to one of the claims 1 to 7, further comprising a keyboard,
wherein the first operation unit or the second operation unit is the keyboard, and the control unit switches the action of the device apparatus to the action of the host apparatus according to an operation to a predefined key of the keyboard.

9. A method of controlling an input signal of an electronic apparatus having a display unit, the method comprising the steps of:
performing switching from a driver for operating a communication unit of the electronic apparatus as a host apparatus to a driver for operating the communication unit as a device apparatus; and
transmitting the input signal to an external apparatus.

10. The method according to claim 9, wherein:
the input signal includes a first input signal received from a first operation unit and a second input signal received from a second operation unit,
in a step of transmitting the input signal to the external apparatus, the first input signal is transmitted, and
the method further includes a step of performing a display according to the second input signal in the display unit.

11. The method according to claim 10, further comprising a step of returning from the driver for the operating the communication unit of the electronic apparatus as the device apparatus to the driver for operating the communication unit as the host apparatus when the electronic apparatus receives a specific input signal.

12. A program for executing, on a computer which receives an input signal from an operation unit and is built in an electronic apparatus having a display unit, the method of one of the claims 9 to 11.

13. A computer-readable recording medium having recorded thereon a program for controlling an input signal of an electronic apparatus having a display unit, the program executed by the electronic apparatus comprising the steps of:
performing switching from a driver for operating a communication unit of the electronic apparatus as a host apparatus to a driver for operating the communication unit as a device apparatus; and
transmitting the input signal to an external apparatus.

14. The computer-readable recording medium according to claim 13, wherein the input signal includes a first input signal received from a first operation unit and a second input signal received from a second operation unit,
wherein, in a step of transmitting the input signal to the external apparatus, the first input signal is transmitted, and
wherein the program further includes a step of performing a display according to the second input signal in the display unit.

15. The computer-readable recording medium according to claim 13, wherein the program further includes a step of returning from the driver for operating the communication unit of the electronic apparatus as the device apparatus to the driver for operating the communication unit as the host apparatus when the electronic apparatus receives a specific input signal.
